# EUROPÄISCHE PATENTANMELDUNG

(11) **EP 1 785 758 A1**
(43) Veröffentlichungstag der Anmeldung: **16.05.2007**
(21) Anmeldenummer: 06021714.8
(22) Anmeldetag: 17.10.2006
(51) Int. Cl.: G02B 7/00, G02B 25/00

(54) **Am Kopf zu tragende Lupe**

(30) Priorität: 15.11.2005 DE 102005054444
(71) Anmelder: Carl Zeiss Surgical GmbH, 73447 Oberkochen (DE)
(72) Erfinder: Beate, Bastian, 80798 München (DE); Hattendorf, Guido, Phoenix, AZ 85013 (US); Hertle, Roland, 86750 Megesheim (DE); Pfeifer, Reinhold, 86609 Megesheim (DE)
(74) Vertreter: Geyer, Fehners & Partner

(57) **Zusammenfassung**

Es wird bereitgestellt eine Kopflupe mit einer Vergrößerungsoptik (2) sowie einer Koppelmechanik (5) zum Befestigen der Vergrößerungsoptik (2) an einer auf den Kopf eines Benutzers aufsetzbaren Kopfhalterung (6),
wobei die Koppelmechanik (5) einen Schwenkmechanismus, der ein Verschwenken der Vergrößerungsoptik (2) relativ zur Kopfhalterung (6) um eine Schwenkachse (S1, S2) ermöglicht, und einen Verstellmechanismus aufweist, der ein Verstellen des Abstandes zwischen der Vergrößerungsoptik (2) und entweder der Schwenkachse (S2) oder der Kopfhalterung (6) durch Bewegen der Vergrößerungsoptik (2) entlang einer Längsachse ermöglicht,
wobei der Schwenkmechanismus einen Schwenkwinkelbereich für die Vergrößerungsoptik (2) bereitstellt und ein Ein- und Feststellen von verschiedenen, in den Schwenkwinkelbereich fallenden Schwenkwinkelns der Vergrößerungsoptik (2) ermöglicht,
wobei die Schwenkachse (S1) im aufgesetzten Zustand der Kopflupe (1) vor dem Kopf des Benutzers verläuft,
wobei der Verstellmechanismus eine Teleskopstange (8) aufweist, an deren vorderen Ende (14) die Vergrößerungsoptik befestigt ist.

## Beschreibung

Die vorliegende Erfindung betrifft eine Kopflupe mit einer Vergrößerungsoptik sowie einer Koppelmechanik zum Befestigen der Vergrößerungsoptik an einer auf dem Kopf des Benutzers aufsetzbaren Kopfhalterung, wobei die Koppelmechanik einen Schwenkmechanismus, der ein Verschwenken der Vergrößerungsoptik relativ zur Kopfhalterung um eine Schwenkachse ermöglicht, und einen Verstellmechanismus aufweist, der ein Verstellen des Abstandes zwischen der Vergrößerungsoptik und entweder der Schwenkachse oder der Kopfhalterung durch Bewegen der Vergrößerungsoptik entlang einer Längsachse ermöglicht, wobei der Schwenkmechanismus einen Schwenkwinkelbereich für die Vergrößerungsoptik bereitstellt und ein Ein- und Feststellen von verschiedenen, in den Schwenkwinkelbereich fallenden Schwenkwinkeln der Vergrößerungsoptik ermöglicht, wobei die Schwenkachse im aufgesetzten Zustand der Kopflupe von dem Kopf des Benutzers verläuft.

Eine solche Kopflupe ist beispielsweise aus der US 6,667,832 B2 bekannt, wobei der Verstellmechanismus eine Stange aufweist, auf der ein Träger, an dem die Vergrößerungsoptik befestigt ist, in Längsrichtung verschoben werden kann. Dies führt nachteilig dazu, daß bei einem minimalen Abstand zwischen den Augen des Benutzers und der Vergrößerungsoptik die Stange relativ zum Träger nach vorne übersteht. Die Länge dieses überstehenden Abschnittes der Stange entspricht im wesentlichen dem maximalen Abstand zwischen der Vergrößerungsoptik und den Augen des Benutzers. Somit führt ein vorgegebener Einstellbereich für den Abstand zwischen der Vergrößerungsoptik und den Augen des Benutzers dazu, daß die Stange stets in unerwünschter Weise nach vorne relativ zur Vergrößerungsoptik übersteht, wenn nicht der maximale Abstand zwischen der Vergrößerungsoptik und den Augen des Benutzers eingestellt ist.

Bei einer in der DE 28 02 940 C2 beschriebenen Kopflupe verläuft nachteilig die Schwenkachse im aufgesetzten Zustand der Kopflupe etwa in der Mitte zwischen Vorder- und Hinterkopf. Da die Vergrößerungsoptik vor den Augen des Benutzers angeordnet ist, ist der Schwenkhebel und somit das durch die Vergrößerungsoptik verursachte Drehmoment hoch. Dies ist einerseits unangenehm beim Tragen der Kopflupe, andererseits ist ein hoher mechanischer Aufwand zu treiben, um eine genaues Verschwenken und damit eine genaue Einstellung der Kopflupe auf den entsprechenden Blickwinkel des Benutzers zu erreichen.

Ausgehend hiervon ist es Aufgabe der Erfindung, eine Kopflupe bereitzustellen, bei der die eingangs beschriebenen Nachteile so gut wie vollständig überwunden sind.

Erfindungsgemäß wird die Aufgabe bei einer eingangs beschriebenen Kopflupe dadurch gelöst, daß der Verstellmechanismus eine Teleskopstange aufweist, wobei an einem vorderen Ende der Teleskopstange die Vergrößerungsoptik befestigt ist. Durch das Vorsehen der Teleskopstange wird der über die Vergrößerungsoptik vorstehende Abschnitt minimiert und kann unabhängig von dem bereitgestellten Einstellbereich für den Abstand zwischen der Vergrößerungsoptik und den Augen des Benutzers festgelegt werden. Der überstehende Teil ist somit unabhängig von dem eingestellten Abstand zwischen Vergrößerungsoptik und Augen des Benutzers. Gerade bei geringen Abständen ist dies besonders vorteilhaft im Vergleich zu der Kopflupe der US 6,667,832 B2.

Die Teleskopstange weist insbesondere mehrere ineinander verschieblich geführte dünnwandige Rohre auf, wobei der Rohrquerschnitt bevorzugt eine größere Breite als Höhe aufweist. Insbesondere umfaßt die Teleskopstange zwei, drei oder mehrere Rohre.

Die Teleskopstange kann insbesondere so ausgebildet sein, daß bei jeder beliebigen Stellung eines inneren Rohrs im äußeren Rohr dieses durch Klemmung bzw. Reibschluß fixiert ist. Die Kräfte sind bevorzugt so gewählt, daß bei normaler Verwendung die Stellung der einzelnen Rohre der Teleskopstange fixiert ist. Wenn der Benutzer am vorderen Ende der Teleskopstange zieht oder drückt, kann er den Abstand verändern.

Insbesondere kann die Vergrößerungsoptik schwenkbar am vorderen Ende der Teleskopstange angelenkt sein. Dabei kann es sich um die Schwenkachse der Kopflupe bzw. eine weitere Schwenkachse handeln. Bevorzugt sind beide Schwenkachsen parallel.

Die Teleskopstange ist so ausgebildet, daß ihre Längenänderung entlang der Längsachse erfolgt.

Da die Schwenkachse vor dem Kopf des Benutzers verläuft, ist der Schwenkarm deutlich geringer im Vergleich zu dem Fall, bei dem die Schwenkachse im Bereich zwischen Vorder- und Hinterkopf verläuft. Dies führt zu einem geringeren Drehmoment, wodurch einerseits der Tragekomfort erhöht wird und andererseits der mechanische Aufwand zur genauen Einstellung eines Schwenkwinkels verringert werden kann. Durch den kürzeren Schwenkarm bei einem im Vergleich zur DE 28 02 940 C2 gleichen Schwenkbereich erhöht sich der Schwenkwinkelbereich zusätzlich.

Da die Kopflupe ferner auch den Verstellmechanismus aufweist, kann für jede Blickrichtung der Schwenkwinkel der Vergrößerungsoptik optimal gewählt werden und gleichzeitig kann der Abstand zwischen der Vergrößerungsoptik und den Augen des Benutzers minimiert oder z.B. konstant gehalten werden, wodurch unerwünschte Sehfeldeinschränkungen, die bei einem zu großen Abstand zwischen Auge und Vergrößerungsoptik (Schlüssellocheffekt) auftreten, vermieden werden können.

Der aufgesetzte Zustand der Kopflupe ist der Zustand, bei dem die Vergrößerungsoptik über die Koppelmechanik an der Kopfhalterung befestigt ist und die Kopfhalterung auf den Kopf des Benutzers aufgesetzt ist.

Die Längsachse erstreckt sich bevorzugt geradlinig, so daß der Verstellmechanismus eine geradlinige Bewegung der Vergrößerungsoptik ermöglicht. Die Längsachse kann jedoch auch gekrümmt sein, so daß der Verstellmechanismus eine Bewegung der Vergrößerungsoptik entlang einer gekrümmten Bahnkurve vorgibt. Auf jeden Fall findet aufgrund der Bewegung der Vergrößerungsoptik entlang der Längsachse eine Änderung des Abstands zwischen der Vergrößerungsoptik und entweder der Schwenkachse oder der Kopfhalterung statt. Der Verstellmechanismus kann keine reine Dreh- oder Schwenkbewegung realisieren, sondern gibt immer eine Längsbewegung vor.

Der Schwenkmechanismus der Kopflupe kann ferner ein Verschwenken der Vergrößerungsoptik um eine weitere Schwenkachse ermöglichen, wobei der Verstellmechanismus das Verstellen des Abstandes zwischen beiden Schwenkachsen durch Bewegen der Vergrößerungsoptik entlang der Längsachse ermöglicht. Damit ist ein weiterer Freiheitsgrad zur optimalen Einstellung in der Vergrößerungsoptik für jeden Blickwinkel gegeben. Insbesondere kann die weitere Schwenkachse auch dazu benutzt werden, um die Kopflupe aus dem Sehfeld des Benutzers herauszuschwenken, so daß der Benutzer bei aufgesetzter Kopflupe den zu betrachtenden Gegenstand, wenn er dies wünscht, auch ohne Kopflupe betrachten kann.

Die weitere Schwenkachse verläuft im aufgesetzten Zustand der Kopflupe insbesondere vor dem Kopf des Benutzers. Damit kann der Abstand der Vergrößerungsoptik zur weiteren Schwenkachse minimiert werden, was zu einer Verringerung des Drehmomentes führt. Die Verringerung des Drehmomentes führt zu einem erhöhten Tragekomfort für den Benutzer, da beispielsweise der Druck auf die Nase des Benutzers, wenn die Kopfhalterung eine Nasenabstützung aufweist, geringer ist.

Insbesondere ist der Verstellmechanismus so ausgebildet, daß er eine stufenlose Abstandseinstellung ermöglicht. Damit kann äußerst genau die gewünschte Einstellung erzielt werden. Die stufenlose Verstellbarkeit wird insbesondere durch Reibschluß bzw. -kräfte verwirklicht.

Die Vergrößerungsoptik umfaßt insbesondere zwei Okulare, wobei jedes Okular einem Auge des Benutzers zugeordnet ist. Damit ist insbesondere auch eine Stereo-Kopflupe möglich.

Die beiden Okulare können an einem Okularträger befestigt sein, der um die Schwenkachse(n) schwenkbar ist. Dadurch wird sichergestellt, daß die beiden Okulare immer um den gleichen Winkel verschwenkt werden.

Der Verstellmechanismus kann eine Teleskopstange umfassen. Insbesondere kann ein (vorderes) Ende der Teleskopstange mit dem Okularträger in der Mitte zwischen beiden Okularen verbunden sein. Damit wird eine äußerst kleine und kompakte Kopflupe bereitgestellt, bei der der Abstand in der gewünschten Art und Weise eingestellt werden kann.

Das vordere Ende der Teleskopstange kann einen ergonomisch ausgebildeten Griffbereich (insbesondere für Daumen und Zeigefinger) aufweisen.

Die Koppelmechanik kann insbesondere lösbar mit der Kopfhalterung verbindbar sein. Ferner ist es möglich, daß die Kopfhalterung Teil der Kopflupe ist. Die Kopfhalterung kann beispielsweise eine Brille sein oder auch in Art einer Brille ausgebildet sein. Es sind aber auch alle anderen Arten von Kopfhalterungen möglich, insbesondere helmartige, sonstige aufsetzbare oder klemmbare Halterungen.

Der Schwenkmechanismus kann so ausgebildet sein, daß die Schwenkwinkel innerhalb des Schwenkwinkelbereichs stufenlos einstellbar sind. Dazu kann beispielsweise ein Reibschluß dienen.

Die Erfindung wird nachfolgend unter Bezugnahme auf die Zeichnungen beispielshalber noch näher erläutert. Es zeigen:
- Fig. 1: eine schematische Draufsicht auf eine Kopflupe gemäß einer Ausführungsform;

- Fig. 2: eine vergrößerte Draufsicht auf die Koppelmechanik und die Vergrößerungsoptik der Kopflupe von Fig. 1;
- Fig. 3: eine vergrößerte Seitenansicht der Koppelmechanik und Vergrößerungsoptik von Fig. 2;
- Fig. 4: eine Seitenansicht mit eingefahrener Teleskopstange, und
- Fig. 5: eine Seitenansicht im hochgeklappten Zustand der Kopflupe.

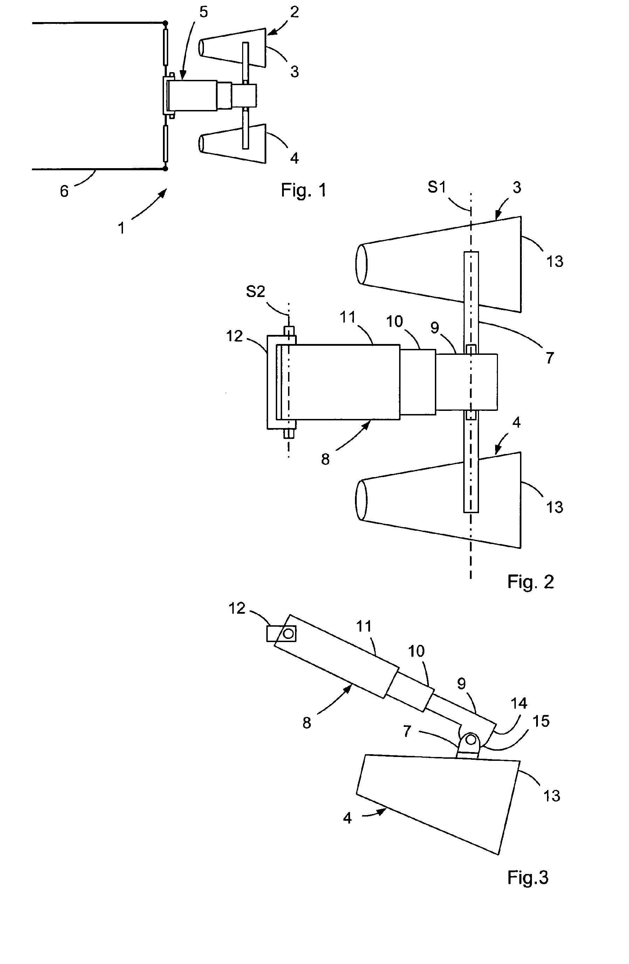

Bei der in Fig. 1 gezeigten Ausführungsform umfaßt die Kopflupe 1 eine Vergrößerungsoptik 2 mit zwei Okularen 3, 4 sowie eine Koppelmechanik 5, an der die Vergrößerungsoptik 2 befestigt ist und die zum Verbinden der Vergrößerungsoptik 2 mit einer auf den Kopf eines Benutzers aufsetzbaren Kopfhalterung 6 dient. Die Kopfhalterung 6 ist hier als Brille ausgebildet.

Die Koppelmechanik 5 umfaßt, wie z.B. aus Fig. 2 ersichtlich ist, einen Okularträger 7, an dem die beiden Okulare 3, 4 befestigt sind. Der Abstand zwischen beiden Okularen 3, 4 ist bevorzugt entsprechend dem Pupillenabstand des Benutzers gewählt. Insbesondere kann der Okularträger 7 so ausgebildet sein (nicht gezeigt), daß der Abstand zwischen beiden Okularen 3 und 4 einstellbar ist.

Der Okularträger 7 ist schwenkbar an das vorderste Element 9 einer Teleskopstange 8 angelenkt, so daß der Okularträger 7 und somit die Okulare 3 und 4 um eine Schwenkachse S1 geschwenkt werden können. Die schwenkbare Anlenkung ist so ausgestaltet, daß ein Schwenkwinkelbereich von beispielsweise 50° möglich ist, wobei in den Schwenkwinkelbereich fallende Schwenkwinkel stufenlos ein- und feststellbar sind. Dies wird hier durch einen Reibschluß zwischen dem Okularträger 7 und dem vorderen Element 9 erreicht, so daß der eingestellte Schwenkwinkel beibehalten wird. Nur bei erhöhtem Kraftaufwand kann er verstellt werden.

Die Teleskopstange 8 umfaßt hier neben dem vorderen Element 9 noch zwei weitere Elemente 10, 11, wobei das hintere Element 11 mit seinem hinteren Ende schwenkbar an einen Adapter 12 angelenkt ist, der zum Verbinden der Koppelmechanik 5 mit der Kopfhalterung 6 dient. Durch das schwenkbare Anlenken des hinteren Elementes 11 an den Adapter 12 ist eine Verschwenkbarkeit der Teleskopstange 8 um eine zweite Schwenkachse S2 möglich. Auch hier liegt ein Reibschluß zwischen dem hinteren Element 11 und dem Adapter 12 vor, so daß die gewünschte Schwenkstellung leicht einstellbar ist.

Durch die beiden Schwenkachsen S1 und S2 sowie die Möglichkeit des Einstellens des Abstandes zwischen den beiden Schwenkachsen S1 und S2 mittels der Teleskopstange 8 können die Okulare 3 und 4 für alle Blickwinkel des Benutzers in die optimale Schwenkposition und gleichzeitig auch möglichst nah an die Augen des Benutzers bzw. die Brillengläser positioniert werden. Damit kann der nachteilige Schlüssellocheffekt aufgrund eines zu großen Abstandes zwischen Auge und Okular vermieden werden.

Bei der in Fig. 1 bis 3 gezeigten Ausführungsform ist die Teleskopstange 8 um ca. 30° nach unten geneigt (relativ zu einer horizontalen Linie (nicht gezeigt) in Fig. 3) und sind die Okulare 3, 4 um ca. 15° gegenüber der horizontalen Linie nach unten geneigt.

Die Okulare 3, 4 sind hier für einen Arbeitsabstand (also Abstand zwischen dem vorderen Okularende 13 und einem zu betrachtenden Objekt) von ca. 20 bis 60 cm und insbesondere für einen Arbeitsabstand von 30 bis 50 cm ausgelegt. Die Anpassung der Okularstellung an die Blickrichtung wird bevorzugt durch Verschwenken um die erste Schwenkachse S1 durchgeführt. Die zweite Schwenkachse S2 dient bevorzugt zum Hochklappen der Kopflupe, so daß der Benutzer bei aufgesetzter Kopflupe das Objekt auch ohne Kopflupe betrachten kann.

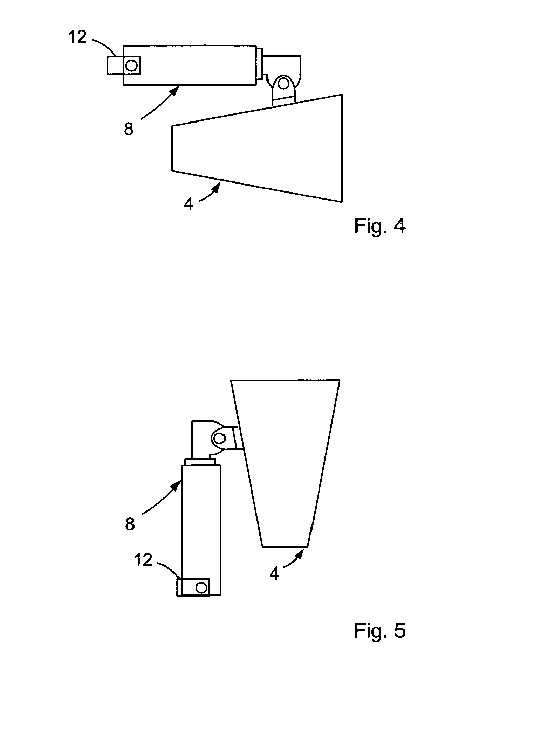

In Fig. 4 ist die Teleskopstange 8 ganz eingefahren, so daß der Abstand zwischen beiden Schwenkachse S1 und S2 minimiert ist. Ferner sind die Schwenkwinkel bezüglich der beiden Achsen S1 und S2 ca. 0°. Dies ist z.B. die bevorzugte Einstellung für einen Geradeaus-Blick des Benutzers.

In Fig. 5 ist die Kopflupe 1 um 90° um die zweite Schwenkachse S2 nach oben geklappt. In diesem Fall kann der Benutzer das zu betrachtende Objekt ohne Kopflupe 1 betrachten.

Das vordere Ende 14 des vorderen Elements der Teleskopstange 8 kann ergonomisch so geformt sein, daß ein Griffbereich ausgebildet ist. Somit kann der Benutzer das vordere Ende 14 z.B. zwischen Daumen und Zeigefinger nehmen und durch Ziehen bzw. Schieben und Verschwenkung die gewünschte Ausrichtung und Positionierung für die Okulare einstellen.

Ferner ist es möglich, in der Unterseite des zweiten und gegebenenfalls dritten Elements 10, 11 der Teleskopstange 8 einen Schlitz auszubilden, in den der Ansatz 15 des vorderen Elements 9, an den der Okularträger 7 angelenkt ist, einfahren kann, so daß die Gesamtlänge der Teleskopstange im zusammen geschobenen Zustand noch kleiner ist im Vergleich zur Darstellung in Fig. 4.

## Patentansprüche

1. Kopflupe mit einer Vergrößerungsoptik (2) sowie einer Koppelmechanik (5) zum Befestigen der Vergrößerungsoptik (2) an einer auf den Kopf eines Benutzers aufsetzbaren Kopfhalterung (6),
wobei die Koppelmechanik (5) einen Schwenkmechanismus, der ein Verschwenken der Vergrößerungsoptik (2) relativ zur Kopfhalterung (6) um eine Schwenkachse (S1, S2) ermöglicht, und einen Verstellmechanismus aufweist, der ein Verstellen des Abstandes zwischen der Vergrößerungsoptik (2) und entweder der Schwenkachse (S2) oder der Kopfhalterung (6) durch Bewegen der Vergrößerungsoptik (2) entlang einer Längsachse ermöglicht,
wobei der Schwenkmechanismus einen Schwenkwinkelbereich für die Vergrößerungsoptik (2) bereitstellt und ein Ein- und Feststellen von verschiedenen, in den Schwenkwinkelbereich fallenden Schwenkwinkelns der Vergrößerungsoptik (2) ermöglicht,
wobei die Schwenkachse (S1) im aufgesetzten Zustand der Kopflupe (1) vor dem Kopf des Benutzers verläuft,
**dadurch gekennzeichnet, daß** der Verstellmechanismus eine Teleskopstange (8) aufweist,
wobei an einem vorderen Ende (14) der Teleskopstange (8) die Vergrößerungsoptik befestigt ist.

2. Kopflupe nach Anspruch 1, bei der der Schwenkmechanismus ein Verschwenken der Vergrößerungsoptik (2) um eine weitere Schwenkachse (S2) und der Verstellmechanismus das Verstellen des Abstandes zwischen beiden Schwenkachsen (S1, S2) durch Bewegen der Vergrößerungsoptik (2) entlang der Längsachse ermöglicht.

3. Kopflupe nach Anspruch 2, bei der die weitere Schwenkachse (S2) im aufgesetzten Zustand der Kopflupe (1) vor dem Kopf des Benutzers verläuft.

4. Kopflupe nach einem der obigen Ansprüche, bei der die Teleskopstange eine stufenlose Abstandseinstellung ermöglicht.

5. Kopflupe nach einem der obigen Ansprüche, bei der die Vergrößerungsoptik (2) zwei Okulare (3, 4) umfaßt, wobei jedes Okular einem Auge des Benutzers zugeordnet ist.

6. Kopflupe nach Anspruch 5, bei der die beiden Okulare an einem Okularträger (7) befestigt sind, der um die Schwenkachse(n) (S1, S2) schwenkbar ist.

7. Kopflupe nach Anspruch 6, bei der das vordere Ende der Teleskopstange (8) mit dem Okularträger (7) in der Mitte zwischen beiden Okularen (3, 4) verbunden ist.

8. Kopflupe nach einem der obigen Ansprüche, bei der die Vergrößerungsoptik (2) schwenkbar am vorderen Ende der Teleskopstange (8) angelenkt ist.

9. Kopflupe nach einem der obigen Ansprüche, bei der das vordere Ende der Teleskopstange einen ergonomisch geformten Griffbereich aufweist.

10. Kopflupe nach einem der obigen Ansprüche, bei der die Koppelmechanik (5) lösbar mit der Kopfhalterung (6) verbindbar ist.

11. Kopflupe nach einem der obigen Ansprüche, bei der die Kopfhalterung (6) Teil der Kopflupe (1) ist.

12. Kopflupe nach einem der obigen Ansprüche, bei der die Schwenkwinkel innerhalb des Schwenkwinkelbereichs stufenlos einstellbar sind.
